# EUROPÄISCHE PATENTANMELDUNG

(11) **EP 2 395 039 A1**
(43) Veröffentlichungstag der Anmeldung: **14.12.2011**
(21) Anmeldenummer: 10163576.1
(22) Anmeldetag: 21.05.2010
(51) Int. Cl.: C08G 64/02, C08G 18/46, C08G 64/16

(54) **Polymeres Flammschutzmittel**

(71) Anmelder: BASF SE, 67056 Ludwigshafen (DE)
(72) Erfinder: Die Erfindernennung liegt noch nicht vor

(57) **Zusammenfassung**

Die vorliegende Erfindung betrifft ein Polycarbonat, enthaltend mindestens eine phosphorhaltige Gruppe, die Verwendung des Polycarbonats als Flammschutzmittel, ein Verfahren zur Herstellung eines Polyurethans, bei dem ein solches Polycarbonat eingesetzt wird und ein Polyurethan, erhältlich nach einem solchen Verfahren.

## Beschreibung

Die vorliegende Erfindung betrifft ein Polycarbonat, enthaltend mindestens eine phosphorhaltige Gruppe, die Verwendung des Polycarbonats als Flammschutzmittel, ein Verfahren zur Herstellung eines Polyurethans, bei dem ein solches, mindestens eine phosphorhaltige Gruppe enthaltendes Polycarbonat eingesetzt wird und ein Polyurethan, erhältlich nach einem solchen Verfahren.

Es gibt eine Reihe unterschiedlicher Methoden Polymere, insbesondere Polyurethane und ganz besonders Polyurethanschäume, flammgeschützt auszurüsten. Zum einen kann man durch Verkrustung das brennbare Material dem Zugriff der Flamme entziehen. Thermische Hydrolyseprodukte entziehen der Polymermatrix Sauerstoff und führen zur Ausbildung einer Kohleschicht an der Oberfläche des Polymers. Diese Kohleschicht schützt den unter ihr liegenden Kunststoff sowohl vor thermischer als auch vor oxidativer Zersetzung durch die Flamme. Man spricht von der sogenannten Intumeszenz. Weit verbreitete Mittel, um die Ausbildung einer verkohlten Kruste im Brandfall zu bewirken, sind phosphorhaltige Verbindungen, darunter phosphororganische Verbindungen. Phosphororganische Flammschutzmittel basieren meist auf Phosphat-, Phosphonat- oder Phosphitestern.

Als Flammschutzmittel werden ebenfalls halogenierte Verbindungen eingesetzt. Im Gegensatz zu phosphorhaltigen Flammschutzmitteln wirken diese in der Gasphase der Flamme. Dabei fangen niederreaktive Halogenradikale verschiedene hochreaktive Radikale aus Abbauprodukten des Polymers ab und wirken somit einer Brandpropagierung über Radikale entgegen. Besonders wirksam sind dabei bromhaltige Flammschutzmittel. Ein besonders wirksames Flammschutzmittel stellt auch Trichlorisopropylphosphat (TCPP) dar, das sowohl Phosphat als auch Chlor als Halogen enthält und somit über beide oben beschriebenen Mechanismen wirkt.

Halogenierte Flammschutzmittel, insbesondere bromhaltige Flammschutzmittel, sind aber aus toxikologischen, ökologischen und regulatorischen Gründen unerwünscht. Zudem führen halogenhaltige Flammschutzmittel zu einer erhöhten Rauchgasdichte im Brandfall. Es wird daher versucht, halogenhaltige Flammschutzmittel generell zu vermeiden.

Bekannte halogenfreie Flammschutzmittel sind beispielsweise feste Flammschutzmittel, wie Melamin oder Ammoniumpolyphosphat. Dabei haben diese festen Partikel negative Auswirkungen auf die Polymere, insbesondere auf die Eigenschaften von Polyurethanschaumstoffen. Auch bei der Herstellung speziell der Polyurethane verursachen feste Flammschutzmittel Probleme. So werden zur Herstellung von Polyurethanen bevorzugt flüssige Einsatzstoffe, auch in Form von Lösungen, verwendet. Der Einsatz von festen Partikeln führt zu Separationserscheinungen in den üblicherweise für die Polyurethanherstellung verwendeten Mischungen, so dass nur Tagesansätze möglich sind. Weiter führen die festen Flammschutzpartikel zu Abrieb an den Dosiereinheiten, beispielsweise der Schäumanlagen. Zusätzlich haben diese Flammschutzmittel einen negativen Einfluss auf die chemischen Prozesse während des Verschäumens und beeinflussen die Schaumeigenschaften negativ.

Viele flüssige Flammschutzmittel, wie Triethylphosphat (TEP) oder Diethylethanphosphonat (DEEP), tragen beispielsweise zu Emissionen der Kunststoffe bei, wodurch diese einen unangenehmen Geruch aufweisen. Darüber hinaus beeinflussen auch die flüssigen Flammschutzmittel die Schäumreaktion bei der Herstellung von Polyurethan-schaumstoffen sowie die Eigenschaften der Schaumstoffe, wie mechanische Eigenschaften, negativ. Auch wirken bekannte, flüssige Flammschutzmittel häufig als Weichmacher.

Um Problemen mit Emissionen entgegenzuwirken, wurden für Polyurethane einbaubare Flammschutzmittel entwickelt. Einbaubare Flammschutzmittel, wie Exolit® OP560 der Firma Clariant haben in der Regel eine Funktionalität gegenüber Isocyanaten von ≤ 2 und führen in Polyurethanschaumstoffen häufig zu einer Verringerung der Vernetzungsdichte und verschlechtern somit die Eigenschaften des Schaums, insbesondere im Polyurethanhartschaum.

WO 2003104374 A1, WO 2004076509 A2 und WO 2005052031 A1 beschreiben die Verwendung von mit Phosphonsäure umgesetztem, hyperverzweigtem Polyacrylnitrilpolyacrylamid, Polyamid und Polyamin als Rostschutzmittel, Schmiermittel, Textiladditiv und Flammschutzmittel. Für Polyurethane und insbesondere Polyurethanschaumstoffe ist der Einsatz dieser Verbindungen nicht geeignet, da die stickstoffhaltigen Strukturen einen starken Einfluss auf die Katalyse der Schaumbildung ausüben.

Hochverzweigte Polyphosphate werden von der Bayer AG in EP 474076 B1 als Flammschutzmittel für Polycarbonate beschrieben. Aufgrund ihres Aufbaus aus aromatischen Dihydroxyverbindungen und Phosphonatestern oder Polyphosphorverbindungen ist die Löslichkeit dieser Strukturen in den Polyolen der Polyurethanherstellung schlecht, was die Verarbeitung dieser Verbindungsklasse in Polyurethanen schwierig macht.

WO 2007066383 beschreibt hyperverzweigte Polyester, die mit Phosphorverbindungen, wie 9-10-Dihydro-9-oxa-10-phosphaphenanthren-10-oxid, umgesetzt wurden, sowie deren Einsatz als Flammschutzmittel für Harze. Nachteilig sind die geringe thermische und hydrolytische Stabilität der Estergruppen.

Aufgabe der vorliegenden Erfindung war es daher, ein halogenfreies Flammschutzmittel mit zu liefern, das auch bei der Herstellung von Polyurethan eingesetzt werden kann.

Weiter war es Aufgabe der vorliegenden Erfindung, Flammschutzmittel zu liefern, deren Einsatz nicht zu Emissionen in Polymeren, insbesondere in Polyurethanen und speziell in Polyurethanschaumstoffen führt und die bei Einsatz in Polymeren, insbesondere Polyurethanen und speziell Polyurethanschaumstoffen, nicht zu einer Verschlechterung der Eigenschaften, insbesondere der mechanischen Eigenschaften, führen.

Eine weitere Aufgabe der vorliegenden Erfindung war ein Flammschutzmittel zu liefern, das sowohl bei der Extrusion von thermoplastischen Kunststoffen als auch bei der Herstellung von vernetzenden Kunststoffen eingesetzt werden kann.

Diese erfindungsgemäßen Aufgaben werden gelöst durch ein Polycarbonat, enthaltend mindestens eine phosphorhaltige Gruppe, die Verwendung des Polycarbonats als Flammschutzmittel, ein Verfahren zur Herstellung eines Polyurethans, bei dem ein solches, mindestens eine phosphorhaltige Gruppe enthaltendes Polycarbonat, eingesetzt wird und ein Polyurethan, erhältlich nach einem solchen Verfahren.

Unter einem Polycarbonat werden dabei Verbindungen verstanden, die erhältlich sind aus der Reaktion von Alkoholen oder Phenolen mit Phosgen oder aus der Umesterung von Alkoholen oder Phenolen mit Dialkyl- oder Diarylcarbonaten. Polycarbonate sind damit formal Ester der Kohlensäure. Im Rahmen der Erfindung wird dabei von Polycarbonaten gesprochen, wenn das Molekül mindestens 3, vorzugsweise mindestens 5 und insbesondere mindestens 10 -O-(CO)-O- Gruppen aufweist. Dabei werden im Folgenden auch Copolymere als Polycarbonate bezeichnet, wenn diese die oben genannte Mindestanzahl an -O-(CO)-O- Gruppen aufweisen. In einer Ausführungsform der vorliegenden Erfindung weisen erfindungsgemäße Polycarbonate zu mindestens 50%, besonders bevorzugt zu mindestens 70% und insbesondere zu mindestens 90 % der Endgruppen OH-Gruppen auf.

Die Herstellung von Polycarbonaten ist allgemein bekannt und vielfach beschrieben, beispielsweise bei Becker/Braun, Kunststoff-Handbuch Bd. 3/1, Polycarbonate, Polyacetale, Polyester, Celluloseester, Carl-Hanser-Verlag, München 1992, Seiten 118 bis 119, und "Ullmann's Encyclopedia of Industrial Chemistry", 6th Edition, 2000 Electronic Release, Verlag Wiley-VCH.

Neben den linearen Polycarbonaten werden im Rahmen der vorliegenden Erfindung vorzugsweise verzweigte oder hyperverzweigte Polycarbonate verwendet. Auch verzweigte oder hyperverzweigte Polycarbonate sind bekannt und beispielsweise in WO 9850453 und WO 2005026234 beschrieben.

Besonders bevorzugt werden im Rahmen der Erfindung hyperverzweigte Polycarbonate eingesetzt, die herstellbar sind, indem man entweder mindestens ein organisches Carbonat (A) der allgemeinen Formel RO[(CO)O]ₙR mit mindestens einem aliphatischen, aliphatisch/aromatischen oder aromatischen Alkohol (B), welcher mindestens 3 OH-Gruppen aufweist, unter Eliminierung von Alkoholen ROH umsetzt, wobei es sich bei R jeweils unabhängig voreinander um einen geradkettigen oder verzweigten aliphatischen, aromatisch/aliphatischen oder aromatischen Kohlenwasserstoffrest mit 1 bis 20 C-Atomen handelt und wobei die Reste R auch unter Bildung eines Ringes miteinander verbunden sein können, und n eine ganze Zahl zwischen 1 und 5 darstellt oder Phosgen, Diphosgen oder Triphosgen mit dem besagten aliphatischen oder aromatischen Alkohol (B) unter Eliminierung von Chlorwasserstoff umsetzt. Vorzugsweise wird dabei die Umsetzung so durchgeführt, dass das Verhältnis von den OH-Gruppen enthaltenden Verbindungen zu Phosgen oder Carbonat so eingestellt ist, dass OH-Gruppen im Überschuss vorhanden sind. Dabei wird der Einsatz von organischem Carbonat (A) der Verwendung von Phosgen, Diphosgen oder Triphosgen vorgezogen. Die durchschnittliche OH-Funktionalität aller Alkohole, mit denen das organische Carbonat (A) umgesetzt werden, ist dabei vorzugsweise größer als 2.

Unter hyperverzweigten Polycarbonaten werden im Rahmen dieser Erfindung unvernetzte Makromoleküle mit -O-(CO)-O- Gruppen verstanden, die sowohl strukturell als auch molekular uneinheitlich sind. Sie können auf der einen Seite ausgehend von einem Zentralmolekül analog zu Dendrimeren, jedoch mit uneinheitlicher Kettenlänge der Äste, aufgebaut sein. Sie können auf der anderen Seite auch linear, mit funktionellen Seitengruppen, aufgebaut sein oder aber, als Kombination der beiden Extreme, lineare und verzweigte Molekülteile aufweisen. Zur Definition von Dendrimeren und hyperverzweigten Polymeren siehe auch P.J. Flory, J. Am. Chem. Soc. 1952, 74, 2718 und H. Frey et al., Chem. Eur. J. 2000, 6, No. 14, 2499.

Unter "hyperverzweigt" wird im Zusammenhang mit der vorliegenden Erfindung verstanden, dass der Verzweigungsgrad (Degree of Branching, DB), 10 bis 99,9 %, bevorzugt 20 bis 99 %, besonders bevorzugt 20 - 95 % beträgt. Unter "dendrimer" wird im Zusammenhang mit der vorliegenden Erfindung verstanden, dass der Verzweigungsgrad 99,9 - 100% beträgt. Zur Definition des "Degree of Branching" siehe H. Frey et al., Acta Polym. 1997, 48, 30.

Bei den Resten R der als Ausgangsmaterial eingesetzten organischen Carbonate (A) der allgemeinen Formel RO[(CO)O]ₙR handelt es sich jeweils unabhängig voneinander um einen geradkettigen oder verzweigten aliphatischen, aromatisch/aliphatischen oder aromatischen bzw. heteroaromatischen Kohlenwasserstoffrest mit 1 bis 20 C-Atomen. Die beiden Reste R können auch unter Bildung eines Ringes miteinander verbunden sein. Bevorzugt handelt es sich um einen aliphatischen Kohlenwasserstoffrest und besonders bevorzugt um einen geradkettigen oder verzweigten Alkylrest mit 1 bis 5 C-Atomen, oder um einen substituierten oder unsubstituierten Phenylrest.

Bei den Carbonaten A) kann es sich bevorzugt um einfache Carbonate der allgemeinen Formel RO(CO)OR handeln, d.h. in diesem Falle steht n für 1.

Generell handelt es sich bei n um eine ganze Zahl zwischen 1 und 5, bevorzugt zwischen 1 und 3.

Dialkyl- oder Diarylcarbonate können zum Beispiel hergestellt werden aus der Reaktion von aliphatischen, araliphatischen oder aromatischen Alkoholen, vorzugsweise Monoalkoholen mit Phosgen. Weiterhin können sie auch über oxidative Carbonylierung der Alkohole oder Phenole mittels CO in Gegenwart von Edelmetallen, Sauerstoff oder NOₓ hergestellt werden. Zu Herstellmethoden von Diaryl- oder Dialkylcarbonaten siehe auch "Ullmann's" Encyclopedia of Industrial Chemistry", 6th Edition, 2000 Electronic Release, Verlag Wiley-VCH.

Beispiele geeigneter Carbonate A) umfassen aliphatische, aromatisch/aliphatische oder aromatische Carbonate wie Ethylencarbonat, 1,2- oder 1,3-Propylencarbonat, Diphenylcarbonat, Ditolylcarbonat, Dixylylcarbonat, Dinaphthylcarbonat, Ethylphenylcarbonat, Dibenzylcarbonat, Dimethylcarbonat, Diethylcarbonat, Dipropylcarbonat, Dibutylcarbonat, Düsobutylcarbonat, Dipentylcarbonat, Dihexylcarbonat, Dicyclohexylcarbonat, Diheptylcarbonat, Dioctylcarbonat, Didecylacarbonat oder Didodecylcarbonat.

Beispiele für Carbonate A), bei denen n größer als 1 ist, umfassen Dialkyldicarbonate, wie Di(tert.-butyl)dicarbonat oder Dialkyltricarbonate wie Di(tert.-butyl)tricarbonat.

Bevorzugt werden aliphatische Carbonate eingesetzt, insbesondere solche, bei denen die Reste 1 bis 5 C-Atome umfassen, wie zum Beispiel Dimethylcarbonat, Diethylcarbonat, Dipropylcarbonat, Dibutylcarbonat oder Düsobutylcarbonat oder Diphenylcarbonat als aromatisches Carbonat.

Die organischen Carbonate werden mit mindestens einem aliphatischen oder aromatischen Alkohol (B), welcher mindestens 3 OH-Gruppen aufweist oder Gemischen zweier oder mehrerer verschiedener Alkohole umgesetzt. Dabei weist das Gemisch eine durchschnittliche OH-Funktionalität von größer als 2, vorzugsweise größer als 2,5 auf.

Beispiele für Verbindungen mit mindestens drei OH-Gruppen umfassen Glycerin, Trimethylolmethan, Trimethylolethan, Trimethylolpropan, 1,2,4-Butantriol, Tris(hydroxymethyl)amin, Tris(hydroxyethyl)amin, Tris(hydroxypropyl)amin, Pentaerythrit, Diglycerin, Triglycerin, Polyglycerine, Bis(tri-methylolpropan), Tris(hydroxymethyl)isocyanurat, Tris(hydroxyethyl)isocyanurat, Phloroglucinol, Trihydroxytoluol, Trihydroxydimethylbenzol, Phloroglucide, Hexahydroxybenzol, 1,3,5-Benzoltrimethanol, 1,1,1-Tris(4'-hydroxyphenyl)methan, 1,1,1-Tris(4'-hydroxyphenyl)ethan, Zucker, wie zum Beispiel Glucose, Zuckerderivate, tri- oder höherfunktionelle Polyetherole auf Basis tri- oder höherfunktioneller Alkohole und Ethylenoxid, Propylenoxid oder Butylenoxid oder deren Gemischen, oder Polyesterole. Dabei sind Glycerin, Trimethylolethan, Trimethylolpropan, 1,2,4-Butantriol, Pentaerythrit, sowie deren Polyetherole auf Basis von Ethylenoxid oder Propylenoxid besonders bevorzugt.

Diese mehrfunktionellen Alkohole (B) können auch in Mischung mit difunktionellen Alkoholen (B') eingesetzt werden, mit der Maßgabe, dass die mittlere OH-Funktionalität aller eingesetzten Alkohole zusammen größer als 2 ist. Beispiele geeigneter Verbindungen mit zwei OH-Gruppen umfassen Ethylenglykol, Diethylenglykol, Triethylenglykol, 1,2- und 1,3-Propandiol, Dipropylenglykol, Tripropylenglykol, Neopentylglykol, 1,2-, 1,3- und 1,4-Butandiol, 1,2-, 1,3- und 1,5-Pentandiol, Hexandiol, Cyclopentandiol, Cyclohexandiol, Cyclohexandimethanol, Bis(4-hydroxycyclohexyl)methan, Bis(4-hydroxy-cyclohexyl)ethan, 2,2- Bis(4-hydroxycyclohexyl)propan, 1,1'-Bis(4-hydroxyphenyl)-3,3-5-trimethylcyclohexan, Resorcin, Hydrochinon, 4,4'-Dihydroxydiphenyl, Bis-(4-hydroxyphenyl)sulfid, Bis(4-hydroxyphenyl)sulfon, Bis(hydroxymethyl)benzol, Bis(hydroxymethyl)toluol, Bis(p-hydroxyphenyl)methan, Bis(p-hydroxyphenyl)ethan, 2,2-Bis(p-hydroxyphenyl)propan, 1,1-Bis(p-hydroxyphenyl)cyclohexan, Dihydroxybenzophenon, difunktionelle Polyetherpolyole auf Basis Ethylenoxid, Propylenoxid, Butylenoxid oder deren Gemische, Polytetrahydrofuran, Polycaprolacton oder Polyesterole auf Basis von Diolen und Dicarbonsäuren.

Die Diole dienen zur Feineinstellung der Eigenschaften des Polycarbonates. Falls difunktionelle Alkohole eingesetzt werden, wird das Verhältnis von difunktionellen Alkoholen (B') zu den mindestens trifunktionellen Alkoholen (B) vom Fachmann je nach den gewünschten Eigenschaften des Polycarbonates festgelegt. Im Regelfalle beträgt die Menge des oder der Alkohole (B') 0 bis 39,9 mol % bezüglich der Gesamtmenge aller Alkohole (B) und (B') zusammen. Bevorzugt beträgt die Menge 0 bis 35 mol %, besonders bevorzugt 0 bis 25 mol % und ganz besonders bevorzugt 0 bis 10 mol %.

Die Reaktion von Phosgen, Diphosgen oder Triphosgen mit dem Alkohol oder Alkoholgemisch erfolgt in der Regel unter Eliminierung von Chlorwasserstoff, die Reaktion der Carbonate mit dem Alkohol oder Alkoholgemisch zum erfindungsgemäßen hochfunktionellen hochverzweigten Polycarbonat erfolgt unter Eliminierung des monofunktionellen Alkohols oder Phenols aus dem Carbonat-Molekül.

Vorzugsweise werden als mehrfunktionelle Alkohole (B) und als difunktionelle Alkohole (B') mehr als 70 mol-%, besonders bevorzugt mehr als 90 mol-%, bezogen auf die Gesamtmolzahl der eingesetzten Alkohole, und insbesondere ausschließlich aliphatische Alkohole eingesetzt. Weiter ist es bevorzugt, dass die erfindungsgemäßen Polycarbonate keine aromatischen Bestandteile im Carbonatgerüst aufweisen.

Die nach dem erfindungsgemäßen Verfahren gebildeten hochfunktionellen hochverzweigten Polycarbonate sind nach der Reaktion, also ohne weitere Modifikation, mit Hydroxylgruppen und/oder mit Carbonatgruppen beziehungsweise Carbamoylchlorid-gruppen terminiert. Sie lösen sich gut in verschiedenen Lösemitteln, zum Beispiel in Wasser, Alkoholen, wie Methanol, Ethanol, Butanol, Alkohol/Wasser-Mischungen, Aceton, 2-Butanon, Essigester, Butylacetat, Methoxypropylacetat, Methoxyethylacetat, Tetrahydrofuran, Dimethylformamid, Dimethylacetamid, N-Methylpyrrolidon, Ethylencarbonat oder Propylencarbonat.

Unter einem hochfunktionellen Polycarbonat ist im Rahmen dieser Erfindung ein Produkt zu verstehen, das neben den Carbonatgruppen, die das Polymergerüst bilden, end- oder seitenständig weiterhin mindestens drei, bevorzugt mindestens sechs, mehr bevorzugt mindestens zehn funktionelle Gruppen aufweist. Bei den funktionellen Gruppen handelt es sich um Carbonatgruppen beziehungsweise Carbamoylchloridgruppen und/oder um OH-Gruppen, wobei der Anteil an OH-Gruppen vorzugsweise mindestens 50 %, besonders bevorzugt mindestens 70 % und insbesondere mindestens 90 % ist, jeweils bezogen auf die Menge an end- oder seitenständigen funktionellen Gruppen. Die Anzahl der end- oder seitenständigen funktionellen Gruppen ist prinzipiell nach oben nicht beschränkt, jedoch können Produkte mit sehr hoher Anzahl funktioneller Gruppen unerwünschte Eigenschaften, wie beispielsweise hohe Viskosität oder schlechte Löslichkeit, aufweisen. Die hochfunktionellen Polycarbonate der vorliegenden Erfindung weisen zumeist nicht mehr als 500 end- oder seitenständige funktionelle Gruppen, bevorzugt nicht mehr als 100 end- oder seitenständige funktionelle Gruppen auf.

Bei der Herstellung der hochfunktionellen Polycarbonate wird vorzugsweise das Verhältnis von den OH-Gruppen enthaltenden Verbindungen zu Phosgen oder Carbonat so eingestellt, dass das resultierende einfachste Kondensationsprodukt im Mittel entweder eine Carbonat- oder Carbamoylchloridgruppe und mehr als eine OH-Gruppe oder eine OH-Gruppe und mehr als eine Carbonat- oder Carbamoylchloridgruppe enthält.

Die Umsetzung zum hyperverzweigten Polycarbonat erfolgt üblicherweise bei einer Temperatur von 0 bis 300 °C, bevorzugt 0 bis 250°C, besonders bevorzugt bei 60 bis 200°C und ganz besonders bevorzugt bei 60 bis 160°C in Substanz oder in Lösung. Dabei können allgemein alle Lösungsmittel verwendet werden, die gegenüber den jeweiligen Edukten inert sind. Bevorzugt verwendet werden organische Lösungsmittel, wie zum Beispiel Decan, Dodecan, Benzol, Toluol, Chlorbenzol, Xylol, Dimethylformamid, Dimethylacetamid oder Solventnaphtha.

In einer bevorzugten Ausführungsform wird die Kondensationsreaktion in Substanz durchgeführt. Der bei der Reaktion freiwerdende monofunktionelle Alkohol oder das Phenol ROH kann zur Beschleunigung der Reaktion aus dem Reaktionsgleichgewicht entfernt werden, zum Beispiel destillativ, gegebenenfalls bei vermindertem Druck.

Falls Abdestillieren vorgesehen ist, ist es regelmäßig empfehlenswert, solche Carbonate einzusetzen, welche bei der Umsetzung Alkohole oder Phenole ROH mit einem Siedepunkt von weniger als 140°C bei dem vorliegenden Druck freisetzen.

Zur Beschleunigung der Reaktion können auch Katalysatoren oder Katalysatorgemische zugegeben werden. Geeignete Katalysatoren sind Verbindungen, die Veresterungs- oder Umesterungsreaktionen katalysieren, zum Beispiel Alkalihydroxide, Alkalicarbonate, Alkalihydrogencarbonate, vorzugsweise des Natriums, Kaliums oder Cäsiums, tertiäre Amine, Guanidine, Ammoniumverbindungen, Phosphoniumverbindungen, Aluminium-, Zinn-, Zink, Titan-, Zirkon- oder Wismut-organische Verbindungen, weiterhin sogenannte Doppelmetallcyanid (DMC)-Katalysatoren, wie zum Beispiel in der DE 10138216 oder in der DE 10147712 beschrieben.

Vorzugsweise werden Kaliumhydroxid, Kaliumcarbonat, Kaliumhydrogencarbonat, Diazabicyclooctan (DABCO), Diazabicyclononen (DBN), Diazabicycloundecen (DBU), Imidazole, wie Imidazol, 1-Methylimidazol oder 1,2-Dimethylimidazol, Titan-tetrabutylat, Titantetraisopropylat, Dibutylzinnoxid, Dibutylzinn-dilaurat, Zinndioctoat, Zirkonacetylacetonat oder Gemische davon eingesetzt.

Die Zugabe des Katalysators erfolgt im Allgemeinen in einer Menge von 50 bis 10000, bevorzugt von 100 bis 5000 Gew. ppm bezogen auf die Menge des eingesetzten Alkohols oder Alkoholgemisches.

Ferner ist es auch möglich, sowohl durch Zugabe des geeigneten Katalysators, als auch durch Wahl einer geeigneten Temperatur die intermolekulare Polykondensationsreaktion zu steuern. Weiterhin lässt sich über die Zusammensetzung der Ausgangskomponenten und über die Verweilzeit das mittlere Molekulargewicht des hyperverzweigten Polycarbonats einstellen.

Zum Abbruch der intermolekularen Polykondensationsreaktion gibt es verschiedene Möglichkeiten. Beispielsweise kann die Temperatur auf einen Bereich abgesenkt werden, in dem die Reaktion zum Stillstand kommt.

Weiterhin kann man den Katalysator desaktivieren, bei basischen Katalysatoren zum Beispiel durch Zugabe einer sauren Komponente, zum Beispiel einer Lewis-Säure oder einer organischen oder anorganischen Protonensäure.

Die Herstellung der erfindungsgemäßen hochfunktionellen Polycarbonate erfolgt zumeist in einem Druckbereich von 0,1 mbar bis 20 bar, bevorzugt bei 1 mbar bis 5 bar, in Reaktoren oder Reaktorkaskaden, die im Batchbetrieb, halbkontinuierlich oder kontinuierlich betrieben werden.

In einer weiteren bevorzugten Ausführungsform können die erfindungsgemäßen Polycarbonate neben den bereits durch die Reaktion erhaltenen funktionellen Gruppen weitere funktionelle Gruppen enthalten. Die Funktionalisierung kann dabei während des Molekulargewichtsaufbaus oder auch nachträglich, d.h. nach Beendigung der eigentlichen Polykondensation erfolgen.

Gibt man vor oder während des Molekulargewichtsaufbaus Komponenten zu, die neben Hydroxyl- oder Carbonatgruppen weitere funktionelle Gruppen oder funktionelle Elemente besitzen, so erhält man ein Polycarbonat-Polymer mit statistisch verteilten von den Carbonat-, Carbamoylchlorid- oder Hydroxylgruppen verschiedenen Funktionalitäten.

Eine nachträgliche Funktionalisierung kann man erhalten, indem das erhaltene hochfunktionelle, hoch- oder hyperverzweigte Polycarbonat in einem zusätzlichen Verfahrensschritt mit einem geeigneten Funktionalisierungsreagenz, welches mit den OH-und/oder Carbonat- oder Carbamoylchlorid-Gruppen des Polycarbonates reagieren kann, umsetzt. Weiterhin können Hydroxylgruppen enthaltende hochfunktionelle Polycarbonate auch durch Umsetzung mit Alkylenoxiden, zum Beispiel Ethylenoxid, Propylenoxid oder Butylenoxid, in hochfunktionelle Polycarbonat-Polyetherpolyole überführt werden. Dabei sind neben den unfunktionalisierten Polycarbonaten Polycarbonat-Polyetherole als erfindungsgemäße Polycarbonate besonders bevorzugt.

Das erfindungsgemäße Polycarbonat enthält mindestens eine phosphorhaltige Gruppe. Vorzugsweise ist diese mindestens eine phosphorhaltige Gruppe eine Gruppe der allgemeinen Formel (I): 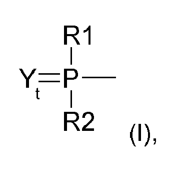 wobei Y für O oder S steht, t für 0 oder 1 steht, R1 und R2 unabhängig voneinander für Wasserstoff, C₁-C₆-Alkyl, C₂-C₁₆-Alkenyl, C₂-C₁₆-Alkinyl, C₁-C₁₆-Alkoxy, C₂-C₁₆-Alkenoxy, C₂-C₁₆-Alkinoxy, C₃-C₁₀-Cycloalkyl, C₃-C₁₀-Cycloalkoxy, Aryl, Aryloxy, C₆-C₁₀-Aryl-C₁-C₁₆-Alkyl, C₆-C₁₀-Aryl-C₁-C₁₆-Alkoxy, C₁-C₁₆-(S-Alkyl), C₂-C₁₆-(S-Alkenyl), C₂-C₁₆-(S-Alkinyl), C₃-C₁₀-(S-Cycloalkyl), S-Aryl, NHC₁-C₁₆Alkyl, NHAryl, SR³, COR⁴, COOR⁵, CONR⁶R⁷ steht und die Reste R³, R⁴, R⁵, R⁶ und R⁷ unabhängig voneinander für C₁-C₁₆-Alkyl, C₂-C₁₆-Alkenyl, C₂-C₁₆-Alkinyl, C₃-C₁₀-Cycloalkyl, Aryl, Aryl-C₁-C₁₆-Alkyl, C₁-C₁₆-(S-Alkyl), C₂-C₁₆-(S-Alkenyl), C₂-C₁₆-(S-Alkinyl) oder C₃-C₁₀-(S-Cycloalkyl) stehen oder die Reste R1 und R2 zusammen mit dem Phosphoratom ein Ringsystem bilden.

R1 und R2 sind vorzugsweise gleich oder verschieden und stehen für C₁-C₁₆-Alkyl, C₁-C₁₆-Alkoxy, C₃-C₁₀-Cycloalkyl, C₃-C₁₀-Cycloalkoxy, Aryl oder Aryloxy. Y steht vorzugsweise für O, t steht vorzugsweise für 1.

Besonders bevorzugt sind R1 und R2 gleich und stehen jeweils für Phenyl, Methoxyphenyl, Tolyl, Furyl, Cyclohexyl, Phenoxy, Ethoxy, Methoxy.

Zur Herstellung der mindestens eine phosphorhaltige Gruppe enthaltenden Polycarbonate werden OH-Gruppenhaltige Polycarbonate, vorzugsweise in Gegenwart einer Base, mit einer Verbindung der allgemeinen Formel (II) 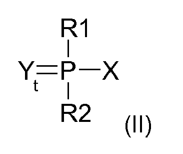 umgesetzt, wobei X für Cl, Br, I, Alkoxy oder H und vorzugsweise für Cl steht und Y, R1 und R2 die oben angegebene Bedeutung haben.

Die Verbindungen der Formel (II) sind bekannt und kommerziell erhältlich oder lassen sich über in der Literatur gut bekannte Synthesewege darstellen. Synthesewege sind beispielsweise beschrieben in Science of Synthesis 42 (2008); Houben Weyl E1-2 (1982); Houben Weyl 12 (1963-1964)].

Reaktionen zur Herstellung des erfindungsgemäßen, mindestens eine phosphorhaltige Gruppe enthaltenden Polycarbonats durch Umsetzung einer OH-Gruppenhaltigen Verbindung mit einer Verbindung der allgemeinen Formel (II) sind bekannt. Dabei werden Reaktionen, ausgehend von der Phosphorverbindung der Formel (II), wobei X für Cl, Br oder I steht beispielsweise in WO 2003062251; Dhawan, Balram; Redmore, Derek, J. Org. Chem. (1986), 51(2), 179-183; WO 9617853; Kumar, K. Ananda; Kasthuraiah, M.; Reddy, C. Suresh; Nagaraju, C, Heterocyclic Communications (2003), 9(3), 313-318; Givelet, Cecile; Tinant, Bernard; Van Meervelt, Luc; Buffeteau, Thierry; Marchand-Geneste, Nathalie; Bibal, Brigitte. J. Org. Chem. (2009), 74(2), 652-659 beschrieben. Reaktionen, bei denen X für Alkoxy steht, zum Beispiel die Umesterung mit Diphenylmethylphosphonat oder Triphenylphosphit, sind beispielsweise in RU 2101288 bzw. US 2005020800 beschrieben.

Reaktionen, bei denen X für H steht, zum Beispiel die Umsetzung mit Diphenylphosphinoxid, sind beispielsweise in Tashev, Emil; Tosheva, Tania; Shenkov, Stoycho; Chauvin, Anne-Sophie; Lachkova, Victoria; Petrova, Rosica; Scopelliti, Rosario; Varbanov, Sabi, Supramolecular Chemistry (2007), 19(7), 447-457. beschrieben.

Geeignete Basen sind beispielsweise Metallhydride, wie Natriumhydrid, oder nicht nukleophile Aminbasen, wie Triethylamin oder Hünigbase, bicyclische Amine, wie DBU, N-Methylimidazol oder N-Methylmorpholin, N-Methylpiperidin, Pyridin, oder substituierte Pyridine, wie Lutidin. Besonders bevorzugt sind Triethylamin und N-Methylimidazol. Die Basen werden dabei im Allgemeinen in äquimolaren Mengen eingesetzt. Sie können aber auch im Überschuss oder gegebenenfalls als Lösemittel eingesetzt werden.

Die Edukte werden im Allgemeinen in stöchiometrischen Mengen im Verhältnis des gewünschten Funktionalisierungsgrades umgesetzt. Es kann vorteilhaft sein, die Phosphorkomponente im Überschuss zu den Hydroxyfunktionalitäten des Polyols einzusetzen. Statistische partielle Phosphorylierung kann durch Einsatz der Phosphorkomponente im Unterschuss erreicht werden. Vorzugsweise werden die Edukte in solchen Verhältnissen eingesetzt, dass der Phosphorgehalt des erfindungsgemäßen, mindestens eine phosphorhaltige Gruppe enthaltenden Polycarbonats mindestens 3 Gew.-%, besonders bevorzugt mindestens 5 Gew.-% und insbesondere mindestens 7 Gew.-% beträgt. Voraussetzung für den angegebenen Phosphorgehalt ist dabei neben der Menge an Verbindung der Formel (II) auch das Vorhandensein an ausreichenden OH-Gruppen im Polycarbonat. Diese können durch entsprechende Reaktionsführung bei der Herstellung des Polycarbonats eingestellt werden, insbesondere durch den Anteil der mindestens dreifunktionellen Polyole und der Reaktionsdauer, die den Umsatz und damit das Molekulargewicht des erhaltenen Polycarbonats steuert. Dabei können alle oder ein Teil der OH- Gruppen im Polycarbonat mit der Phosphorkomponente umgesetzt werden.

Dabei wird die Reaktion zur Herstellung des erfindungsgemäßen, mindestens eine phosphorhaltige Gruppe enthaltenden Polycarbonats vorzugsweise in Gegenwart eines Lösungsmittels durchgeführt. Geeignete Lösemittel für die Phosphorylierungsreaktionen sind inerte organische Lösemittel, wie DMSO, halogenierte Kohlenwasserstoffe, beispielsweise Methylenchlorid, Chloroform, 1,2-Dichlorethan oder Chlorbenzol. Weiterhin geeignete Lösemittel sind Ether, wie Diethylether, Methyl-tert-butylether, Dibutylether, Dioxan oder Tetrahydrofuran. Weiterhin geeignete Lösemittel sind Kohlenwasserstoffe, wie Hexan, Benzol oder Toluol. Weiterhin geeignete Lösemittel sind Nitrile, wie Acetonitril oder Propionitril. Weiterhin geeignete Lösemittel sind Ketone, wie Aceton, Butanon oder tert.-Butyl-methylketon. Es können auch Gemische der Lösemittel verwendet werden, es kann aber auch lösemittelfrei gearbeitet werden.

Die Reaktion wird üblicherweise bei Temperaturen von 0 °C bis zum Siedepunkt des Reaktionsgemisches, vorzugsweise von 0 °C bis 110 °C, besonders bevorzugt bei Raumtemperatur bis 110 °C durchgeführt.

Die Reaktionsgemische werden in üblicher Weise aufgearbeitet, z.B. durch Filtration, Mischen mit Wasser, Trennung der Phasen und gegebenenfalls chromatographische Aufreinigung der Rohprodukte. Die Produkte fallen zum Teil in Form zäher Öle an, die unter vermindertem Druck und bei mäßig erhöhter Temperatur von flüchtigen Anteilen befreit oder gereinigt werden. Sofern die Produkte als Feststoffe erhalten werden, kann die Reinigung auch durch Umkristallisieren oder Digerieren erfolgen.

Eine weitere Möglichkeit der Phosphorfunktionalisierung besteht über die Umsetzung der erfindungsgemäßen Polycarbonate mit Organophosphor-Amiden, z.B. Neopenty-len-N,N-dimethylphosphoramidit [vgl. Nifant'ev, E. E.; Koroteev, M. P.; Kaziev, G. Z.; Koroteev, A. M.; Vasyanina, L. K.; Zakharova, I. S. Russian Journal of General Chemistry (Translation of Zhurnal Obshchei Khimii) (2003), 73(11), 1686-1690.] oder BI-NOL-N,N-dimethylphosphoramidit [vgl.: Hu, Yuanchun; Liang, Xinmiao; Wang, Junwei; Zheng, Zhuo; Hu, Xinquan, Journal of Organic Chemistry (2003), 68(11), 4542-4545. Die Verwendung von P-Amiditen als Phosphorylierungsreagenzien ist in der Chemie gut bekannt [vgl.: DE 4329533 A1 19950309]

Das erfindungsgemäße Polycarbonat, enthaltend mindestens eine phosphorhaltige Gruppe, wird als Flammschutzmittel, vorzugsweise in Kunststoffen eingesetzt. Dabei umfassen Kunststoffe alle bekannten Kunststoffe. Diese umfassen thermoplastische Formmassen, wie Polyethylen (PE), Polypropylen (PP), Polyvinylchlorid (PVC), Polyamid (PA), Polyethylenterephthalat (PET), Polyethylenterephthalatglycol (PETG), Polybutylenterephthalat (PBT), Polyoxymethylen (POM), Polycarbonat (PC), Polymethylmethacrylat (PMMA), Poly(ether)sulfone (PES), thermoplastisch verarbeitbares Polyurethan (TPU), Polyphenylenoxid (PPO), schäumbares und/oder geschäumtes Polypropylen oder eine Mischung aus zwei oder mehreren dieser Polymere. Weiter kann das erfindungsgemäße Polycarbonat auch in vernetzenden Polymeren, beispielsweise in Polyurethan, wie Polyurethanschaumstoffen, eingesetzt werden.

Wird das erfindungsgemäße Polycarbonat, enthaltend mindestens eine phosphorhaltige Gruppe, in thermoplastischen Kunststoffen, einschließlich in thermoplastischem Polyurethan eingesetzt, enthält das erfindungsgemäße Polycarbonat, enthaltend mindestens eine phosphorhaltige Gruppe, vorzugsweise weniger als 10 %, besonders bevorzugt weniger als 2% und insbesondere keine freien OH-Gruppen, jeweils bezogen auf die Summe an phosphorhaltigen Gruppen und OH-Gruppen. Dies wird erreicht durch Umsetzung des erfindungsgemäßen Polycarbonats mit der Verbindung der allgemeinen Formel (I) in entsprechendem Verhältnis.

Polyurethan im Sinn der Erfindung umfasst alle bekannten Polyisocyanat-Polyadditionsprodukte. Diese umfassen Additionsprodukte aus Isocyanat und Alkohol sowie modifizierte Polyurethane, die Isocyanurat-, Allophanat-, Harnstoff-, Carbodiimid-, Uretonimin-, Biuretstrukturen und weitere Isocyanatadditionsprodukte enthalten können. Diese erfindungsgemäßen Polyurethane umfassen insbesondere massive Polyisocyanat-Polyadditionsprodukte, wie Duromere, und Schaumstoffe auf Basis von Polyisocyanat-Polyadditionsprodukten, wie Weichschaumstoffe, Halbhartschaumstoffe, Hartschaumstoffe oder Integralschaumstoffe sowie Polyurethanbeschichtungen und Bindemittel. Weiter sind unter Polyurethanen im Sinn der Erfindung Polymerblends, enthaltend Polyurethane und weitere Polymere, sowie Schaumstoffe aus diesen Polymerblends zu verstehen. Vorzugsweise werden die erfindungsgemäßen Polycarbonate, enthaltend mindestens eine phosphorhaltige Gruppe, bei der Herstellung von Polyurethanschaumstoffen eingesetzt.

Im Rahmen der Erfindung werden unter Polyurethan-Schaumstoffen Schaumstoffe gemäß DIN 7726 verstanden. Dabei weisen erfindungsgemäße Polyurethan-Weichschaumstoffe eine Druckspannung bei 10 % Stauchung bzw. Druckfestigkeit nach DIN 53 421 / DIN EN ISO 604 von 15 kPa und kleiner, vorzugsweise 1 bis 14 kPa und insbesondere 4 bis 14 kPa auf. Erfindungsgemäße Polyurethan-Halbhartschaumstoffe weisen eine Druckspannung bei 10 % Stauchung nach DIN 53 421 / DIN EN ISO 604 von größer 15 bis kleiner 80 kPa auf. Erfindungsgemäße Polyurethan-Halbhartschaumstoffe und Polyurethan-Weichschaumstoffe verfügen nach DIN ISO 4590 über eine Offenzelligkeit von vorzugsweise größer 85 %, besonders bevorzugt größer 90 %. Weitere Details zu erfindungsgemäßen Polyurethan-Weichschaumstoffen und Polyurethan-Halbhartschaumstoffen finden sich im "Kunststoffhandbuch, Band 7, Polyurethane", Carl Hanser Verlag, 3. Auflage 1993, Kapitel 5.

Die erfindungsgemäßen Polyurethan-Hartschaumstoffe weisen eine Druckspannung bei 10 % Stauchung von größer gleich 80 kPa, bevorzugt größer gleich 120 kPa, besonders bevorzugt größer gleich 150 kPa auf. Weiterhin verfügt der Polyurethan-Hartschaumstoff nach DIN ISO 4590 über eine Geschlossenzelligkeit von größer 80%, bevorzugt größer 90 %. Weitere Details zu erfindungsgemäßen Polyurethan-Hartschaumstoffen finden sich im "Kunststoffhandbuch, Band 7, Polyurethane", Carl Hanser Verlag, 3. Auflage 1993, Kapitel 6.

Unter elastomeren Polyurethan-Schaumstoffen sind im Rahmen dieser Erfindung Polyurethan-Schaumstoffe nach DIN 7726 zu verstehen, die nach kurzzeitiger Verformung um 50 % der Dicke nach DIN 53 577 nach 10 Minuten keine bleibende Verformung über 2 % ihrer Ausgangsdicke aufweisen. Dabei kann es sich um einen Polyurethan-Hartschaumstoff, einen Polyurethan-Halbhartschaumstoff oder einen Polyurethan-Weichschaumstoff handeln.

Bei Polyurethan-Integralschaumstoffen handelt es sich um Polyurethan-Schaumstoffe nach DIN 7726 mit einer Randzone, die bedingt durch den Formgebungsprozess eine höhere Dichte als der Kern aufweisen. Die über den Kern und die Randzone gemittelte Gesamtrohdichte liegt dabei vorzugsweise über 100 g/L. Auch bei Polyurethan-Integralschaumstoffen im Sinn der Erfindung kann es sich um Polyurethan-Hartschaumstoffe, Polyurethan-Halbhartschaumstoffe oder Polyurethan-Weichschaumstoffe handeln. Weitere Details zu erfindungsgemäßen Polyurethan-Integralschaumstoffen finden sich im "Kunststoffhandbuch, Band 7, Polyurethane", Carl Hanser Verlag, 3. Auflage 1993, Kapitel 7.

Dabei werden Polyurethane erhalten indem man Isocyanate (a) mit Polyolen (b), einem Polycarbonat nach einem der Ansprüche 1 bis 8 (c) und gegebenenfalls Treibmittel (d), Katalysator (e) und sonstigen Hilfs- und Zusatzstoffen (f) zu einer Reaktionsmischung vermischt und ausreagieren lässt.

Die zur Herstellung der erfindungsgemäßen Polyurethane verwendeten Polyisocyanatkomponenten (a) umfassen alle zur Herstellung von Polyurethanen bekannten Polyisocyanate. Diese umfassen die aus dem Stand der Technik bekannten aliphatischen, cycloaliphatischen und aromatischen zwei- oder mehrwertigen Isocyanate sowie beliebige Mischungen daraus. Beispiele sind 2,2'-, 2,4'- und 4,4'-Diphenylmethandiisocyanat, die Mischungen aus monomeren Diphenylmethandiisocyanaten und höherkernigen Homologen des Diphenylmethandiisocyanats (Polymer-MDI), Isophorondiisocyanat (IPDI) oder dessen Oligomere, 2,4- oder 2,6-Toluylendiisocyanat (TDI) oder deren Mischungen, Tetramethylendiisocyanat oder dessen Oligomere, Hexamethylendiisocyanat (HDI) oder dessen Oligomere, Naphtylendiisocyanat (NDI) oder Mischungen daraus.

Bevorzugt werden 2,4- und/oder 2,6-Tolylendiisocynat (TDI) oder deren Mischungen, monomere Diphenylmethandiisocyanate und/oder höherkernige Homologe des Diphenylmethandiisocynats (Polymer-MDI) und deren Mischungen verwendet. Weitere mögliche Isocyanate sind beispielsweise im "Kunststoffhandbuch, Band 7, Polyurethane", Carl Hanser Verlag, 3. Auflage 1993, Kapitel 3.2 und 3.3.2 angegeben.

Die Polyisocyanatkomponente (a) kann in Form von Polyisocyanatprepolymeren eingesetzt werden. Diese Polyisocyanatprepolymere sind erhältlich, indem vorstehend beschriebene Polyisocyanate (Bestandteil (a-1)) im Überschuss, beispielsweise bei Temperaturen von 30 bis 100 °C, bevorzugt bei etwa 80 °C, mit Polyolen (Bestandteil (a-2)), zum Prepolymer umgesetzt werden.

Polyole (a-2) sind dem Fachmann bekannt und beispielsweise beschrieben im "Kunststoffhandbuch, 7, Polyurethane", Carl Hanser-Verlag, 3. Auflage 1993, Kapitel 3.1. So können beispielsweise als Polyole auch die nachfolgend unter (b) beschriebenen Polyole eingesetzt werden. Dabei kann in einer besonderen Ausführungsform das Polyisocyanatprepolymer auch das erfindungsgemäße Polycarbonat, enthaltend mindestens eine phosphorhaltige Gruppe, enthalten.

Als Polyole können alle zur Polyurethanherstellung bekannten Verbindungen (b) mit mindestens zwei reaktiven Wasserstoffatomen eingesetzt werden, beispielsweise können solche mit einer Funktionalität von 2 bis 8 und einem Molekulargewicht von 400 bis 15000 verwendet werden. So können beispielsweise Polyole, ausgewählt aus der Gruppe der Polyetherpolyole, Polyesterpolyole oder Mischungen daraus, verwendet werden.

Polyetherole werden beispielsweise hergestellt aus Epoxiden, wie Propylenoxid und/oder Ethylenoxid, oder aus Tetrahydrofuran mit wasserstoffaktiven Starterverbindungen, wie aliphatischen Alkoholen, Phenolen, Aminen, Carbonsäuren, Wasser oder Verbindungen auf Naturstoffbasis, wie Saccharose, Sorbit oder Mannit, unter Verwendung eines Katalysators. Zu nennen sind hier basische Katalysatoren oder Doppelmetallcyanidkatalysatoren, wie beispielweise in PCT/EP2005/010124, EP 90444 oder WO 05/090440 beschrieben.

Polyesterole werden z.B. hergestellt aus aliphatischen oder aromatischen Dicarbonsäuren und mehrwertigen Alkoholen, Polythioetherpolyolen, Polyesteramiden, hydroxylgruppenhaltigen Polyacetalen und/oder hydroxylgruppenhaltigen aliphatischen Polycarbonaten, vorzugsweise in Gegenwart eines Veresterungskatalysators. Weitere mögliche Polyole sind beispielsweise im "Kunststoffhandbuch, Band 7, Polyurethane", Carl Hanser Verlag, 3. Auflage 1993, Kapitel 3.1 angegeben.

Polyole (b) umfassen auch Kettenverlängerer und Vernetzungsmittel. Kettenverlängerer und Vernetzungsmittel weisen ein Molekulargewicht von weniger als 400 g/mol auf, wobei Moleküle mit zwei gegenüber Isocyanat reaktiven Wasserstoffatomen als Kettenverlängerer und Moleküle mit mehr als zwei gegenüber Isocyanat reaktiven Wasserstoffen als Vernetzer bezeichnet werden. Dabei kann jedoch auch auf das Kettenverlängerungs- oder Vernetzungsmittel verzichtet werden. Zur Modifizierung der mechanischen Eigenschaften, z.B. der Härte, kann sich allerdings der Zusatz von Kettenverlängerungsmitteln, Vernetzungsmitteln oder gegebenenfalls auch Gemischen davon als vorteilhaft erweisen.

Werden Kettenverlängerungsmittel und/oder Vernetzungsmittel eingesetzt, können die bei der Herstellung von Polyurethanen bekannten Kettenverlängerer und/oder Vernetzer eingesetzt werden. Dies sind vorzugsweise niedermolekulare Verbindungen mit gegenüber Isocyanaten reaktiven funktionellen Gruppen, beispielsweise Glycerin, Trimethylolpropan, Glycol und Diamine. Weitere mögliche niedermolekulare Kettenverlängerungsmittel und/oder Vernetzungsmittel sind beispielsweise im "Kunststoffhandbuch, Band 7, Polyurethane", Carl Hanser Verlag, 3. Auflage 1993, Kapitel 3.2 und 3.3.2 angegeben.

Weiter wird als Komponente (c) ein erfindungsgemäßes Polycarbonat, enthaltend mindestens eine phosphorhaltige Gruppe, eingesetzt. Der Anteil an Polycarbonat, enthaltend mindestens eine phosphorhaltige Gruppe (c), im Folgenden auch als Polycarbonat (c) bezeichnet, ist dabei nicht begrenzt und hauptsächlich abhängig von dem zu erzielenden Flammschutzgrad. Dabei kann der Anteil an Polycarbonat beispielsweise zwischen 0,1 und 50 Gew.-%, vorzugsweise 1 uns 40 Gew.-% und besonders bevorzugt 2 und 30 Gew.-%, jeweils bezogen auf das Gesamtgewicht der Komponenten (a) bis (e), variieren. Dabei beträgt der Phosphorgehalt im fertigen Polyurethan vorzugsweise 0,01 bis 10 Gew.-%, besonders bevorzugt 0,05 bis 5 Gew.-% und insbesondere 0,1 bis 5 Gew.-%, jeweils bezogen auf das Gesamtgewicht des Polyurethans.

Vorzugsweise enthalten erfindungsgemäße Reaktionsmischungen noch Treibmittel (d), wenn das Polyurethan als Polyurethan-Schaumstoff vorliegen soll. Dabei können alle zur Herstellung von Polyurethanen bekannten Treibmittel eingesetzt werden. Diese können chemische und/oder physikalische Treibmittel enthalten. Solche Treibmittel werden beispielsweise im "Kunststoffhandbuch, Band 7, Polyurethane", Carl Hanser Verlag, 3. Auflage 1993, Kapitel 3.4.5 beschrieben. Unter chemischen Treibmitteln werden dabei Verbindungen verstanden, die durch Reaktion mit Isocyanat gasförmige Produkte bilden. Beispiele für solche Treibmittel sind Wasser oder Carbonsäuren. Unter physikalischen Treibmitteln werden dabei Verbindungen verstanden, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe und andere Verbindungen, wie zum Beispiel perfluorierte Alkane, wie Perfluorhexan, Fluorchlorkohlenwasserstoffe, und Ether, Ester, Ketone, Acetale und/oder flüssiges Kohlendioxid. Dabei kann das Treibmittel in jeder beliebigen Menge eingesetzt werden. Vorzugsweise wird das Treibmittel in einer Menge eingesetzt, dass der resultierende Polyurethanschaumstoff eine Dichte von 10 bis 1000 g/L, besonders bevorzugt 20 bis 800 g/L und insbesondere 25 bis 200 g/L aufweist.

Als Katalysatoren (e) können alle zur Polyurethanherstellung üblichen Katalysatoren eingesetzt werden. Solche Katalysatoren werden beispielsweise im "Kunststoffhandbuch, Band 7, Polyurethane", Carl Hanser Verlag, 3. Auflage 1993, Kapitel 3.4.1 beschrieben. Dabei kommen beispielsweise organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexanoat und Zinn-(II)-laurat und die Dialkylzinn-(IV)-salze von organischen Carbonsäuren, z.B. Dibutylzinndiacetat, Dibutylzinndilaurat, Dibutylzinnmaleat und Dioctylzinndiacetat, sowie Bismutcarboxylate, wie Bismut(III)-neodecanoat, Bismut-2-etyhlhexanoat und Bismut-octanoat oder Mischungen in Betracht. Weitere mögliche Katalysatoren sind basische Aminkatalysatoren. Beispiele hierfür sind Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin. Die Katalysatoren können einzeln oder als Mischungen verwendet werden. Gegebenenfalls werden als Katalysatoren (e) Mischungen aus Metallkatalysatoren und basischen Aminkatalysatoren verwendet.

Insbesondere bei Verwendung eines größeren Polyisocyanatüberschusses kommen als Katalysatoren ferner in Betracht: Tris-(dialkylaminoalkyl)-s-hexahydrotriazine, vorzugsweise Tris-(N,N-dimethylaminopropyl)-s-hexahydrotriazin, Tetraalkylammoniumhydroxide, wie Tetramethylammoniumhydroxid, Alkalihydroxide, wie Natriumhydroxid, und Alkalialkoholate, wie Natriummethylat und Kaliumisopropylat, sowie Alkali- oder Ammoniumsalze von Carbonsäuren wie z.B. Kalium- oder Ammoniumformiat, -acetat oder -octoat.

Die Katalysatoren (e) können beispielsweise in einer Konzentration von 0,001 bis 5 Gew.-%, insbesondere 0,05 bis 2 Gew.-% als Katalysator bzw. Katalysatorkombination, bezogen auf das Gewicht der Komponente (b) eingesetzt werden.

Weiter können Hilfsmittel und/oder Zusatzstoffe (f) eingesetzt werden. Dabei können alle zur Herstellung von Polyurethanen bekannten Hilfs- und Zusatzstoffe verwendet werden. Genannt seien beispielsweise oberflächenaktive Substanzen, Schaumstabilisatoren, Zellregler, Trennmittel, Füllstoffe, Farbstoffe, Pigmente, Flammschutzmittel, Hydrolyseschutzmittel, fungistatische und bakteriostatisch wirkende Substanzen. Solche Substanzen sind beispielsweise in "Kunststoffhandbuch, Band 7, Polyurethane", Carl Hanser Verlag, 3. Auflage 1993, Kapitel 3.4.4 und 3.4.6 bis 3.4.11 genannt.

Im Allgemeinen werden bei der Herstellung des erfindungsgemäßen Polyurethans die Polyisocyanate (a), die Polyole (b), die Polycarbonate (c) und gegebenenfalls die Treibmittel (d) in solchen Mengen zur Umsetzung gebracht, dass das ÄquivalenzVerhältnis von NCO-Gruppen der Polyisocyanate (a) zur Summe der reaktiven Wasserstoffatome der Komponenten (b), (c) und gegebenenfalls (d) 0,75 bis 1,5:1, vorzugsweise 0,80 bis 1,25:1 beträgt. Falls die zelligen Kunststoffe zumindest teilweise Isocyanuratgruppen enthalten, wird üblicherweise ein Verhältnis von NCO-Gruppen der Polyisocyanate (a) zur Summe der reaktiven Wasserstoffatome der Komponente (b), (c) und gegebenenfalls (d) und (f) von 1,5 bis 20:1, vorzugsweise 1,5 bis 8:1 verwendet. Ein Verhältnis von 1:1 entspricht dabei einem Isocyanatindex von 100.

Die speziellen Ausgangssubstanzen (a) bis (f) für die Herstellung von erfindungsgemäßen Polyurethanen unterscheiden sich jeweils quantitativ und qualitativ nur geringfügig wenn als erfindungsgemäßes Polyurethan ein thermoplastisches Polyurethan, ein Weichschaumstoff, ein Halbhartschaumstoff, ein Hartschaumstoff oder ein Integralschaumstoff hergestellt werden soll. So werden beispielsweise für die Herstellung von massiven Polyurethanen keine Treibmittel eingesetzt sowie für thermoplastisches Polyurethan überwiegend streng difunktionelle Ausgangssubstanzen eingesetzt. Weiter lässt sich beispielsweise über die Funktionalität und die Kettenlänge der höhermolekularen Verbindung mit mindestens zwei reaktiven Wasserstoffatomen die Elastizität und Härte des erfindungsgemäßen Polyurethans variieren. Solche Modifikationen sind dem Fachmann bekannt.

Die Edukte für die Herstellung eines massiven Polyurethans werden beispielsweise in EP 0989146 oder EP 1460094, die Edukte für die Herstellung eines Weichschaums in PCT/EP2005/010124 und EP 1529792, die Edukte für die Herstellung eines Halbhartschaums im "Kunststoffhandbuch, Band 7, Polyurethane", Carl Hanser Verlag, 3. Auflage 1993, Kapitel 5.4, die Edukte für die Herstellung eines Hartschaumstoffs in PCT/EP2005/010955 und die Edukte für Herstellung eines Integralschaumstoffs in EP 364854, US 5506275 oder EP 897402 beschrieben. Zu den in diesen Dokumenten beschriebenen Edukten wird dann jeweils noch das Polycarbonat (c) zugegeben.

In einer Ausführungsform der Erfindung wird dabei ein Polycarbonat (c) eingesetzt, das weniger als 10 %, besonders bevorzugt weniger als 2% und insbesondere keine freien OH-Gruppen, jeweils bezogen auf die Summe an phosphorhaltigen Gruppen und OH-Gruppen, aufweist.

In einer weiteren Ausführungsform der vorliegenden Erfindung weist das Polycarbonat (c), OH-Gruppen auf. Dabei wird das Polycarbonat (c), vorzugsweise bezüglich Funktionalität und OH-Zahl so angepasst, dass die mechanischen Eigenschaften des erhaltenen Polymers nur geringfügig verschlechtert, bevorzugt sogar verbessert werden. Gleichzeitig wird das Verarbeitungsprofil möglichst geringfügig verändert. Eine solche Anpassung kann beispielsweise dadurch erfolgen, dass die Verbindung (c) eine OH-Zahl und eine Funktionalität aufweist, die im Bereich der OH-Zahl und Funktionalität des eingesetzten Polyols für die Polyurethanherstellung liegt.

Wenn das Polycarbonat (c) OH-Gruppen aufweist, wird bei der Herstellung von Polyurethanweichschaumstoffen als Polycarbonat (c) vorzugsweise eine Verbindung eingesetzt, die eine OH-Zahl von 2 bis 100 mg KOH/g, besonders bevorzugt 10 bis 80 mg KOH/g und insbesondere 20 bis 50 mg KOH/g bei einer OH-Funktionalität von vorzugsweise 2 bis 4, besonders bevorzugt 2,1 bis 3,8 und insbesondere 2,5 bis 3,5, aufweist.

Wenn das Polycarbonat (c) OH-Gruppen aufweist, wird bei der Herstellung von Polyurethanhartschaumstoffen wird als Polycarbonat (c) vorzugsweise eine Verbindung eingesetzt, die eine OH-Zahl von vorzugsweise 2 bis 800 mgKOH/g, besonders bevorzugt 50 bis 600 mg KOH/g und insbesondere 100 bis 400 mg KOH/g bei einer OH-Funktionalität von vorzugsweise 2 bis 8, besonders bevorzugt 2 bis 6 aufweist.

Wenn das Polycarbonat (c) OH-Gruppen aufweist, wird bei der Herstellung von thermoplastischem Polyurethan (TPU) als Polycarbonat (c) vorzugsweise eine Verbindung eingesetzt, die eine OH-Zahl von 2 bis 800 mg KOH/g, besonders bevorzugt 10 bis 600 mg KOH/g und insbesondere 20 bis 400 mgKOH/g bei einer OH-Funktionalität von vorzugsweise 1,8 bis 2,2, besonders bevorzugt 2,9 bis 2,1 und insbesondere 2,0, aufweist.

Wird ein Polyisocyanuratschaumstoff mit einem Verhältnis von NCO-Gruppen der Polyisocyanate (a) zur Summe der reaktiven Wasserstoffatome der Komponente (b), (c) und gegebenenfalls (d) und (f) von 1,5 bis 20:1 hergestellt, beträgt die OH-Funktionalität der Komponente (c) vorzugsweise 2 bis 3 bei einer OH-Zahl von vorzugsweise 20 bis 800 mgKOH/g, besonders bevorzugt 50 bis 600 mg KOH/g und insbesondere 100 bis 400 mgKOH/g.

Es ist aber auch jeweils die Verwendung von allen Polycarbonaten (c) möglich.

Dabei ist das Polycarbonat, enthaltend mindestens eine phosphorhaltige Gruppe (c) vorzugsweise in den Polyolen (b) löslich. Dabei ist unter "löslich" zu verstehen, dass sich in einer Mischung aus Polyolkomponente (b) und der Komponente (c) im Verhältnis der späteren Einsatzmenge zur Herstellung des Polyurethans nach 24 h stehen lassen bei 50 °C keine mit bloßem Auge sichtbare zweite Phase bildet. Dabei kann die Löslichkeit beispielsweise durch Funktionalisierung der Komponente (c) bzw. des erfindungsgemäßen Polycarbonats, beispielsweise mit Alkylenoxyd, verbessert werden.

Im Folgenden soll die Erfindung anhand von Beispielen verdeutlicht werden.

### Synthese eines Polycarbonats

2400g Trimethylolpropan x 1,2 Propylenoxid, 1417,5 g Diethylcarbonat und 0,6 g K₂CO₃ als Katalysator (250 ppm Katalysator, bezogen auf die Masse Alkohol) wurden in einem 4 L Dreihalskolben, ausgestattet mit Rührer, Rückflusskühler und Innenthermometer vorgelegt. Die Mischung wurde auf 120°C - 140°C erwärmt und 2 h bei dieser Temperatur gerührt. Mit fortschreitender Reaktionsdauer reduzierte sich die Temperatur des Reaktionsgemisches bedingt durch die einsetzende Siedekühlung des freigesetzten Ethanol. Anschließend wurde der Rückflusskühler gegen einen absteigenden Kühler getauscht, das Ethanol abdestilliert und die Temperatur des Reaktionsgemisches langsam bis auf 160°C erhöht. Dabei wurden 795 g Ethanol erhalten.

### Analytik:

Die Reaktionsprodukte wurden anschließend per Gelpermeationschromatographie analysiert, Laufmittel war Dimethylacetamid, als Standard wurde Polymethylmethacrylat (PMMA) verwendet. Folgende Werte wurden ermittelt:
Mₙ: 827 g/mol
M_{w}: 1253 g/mol

Die Bestimmung der OH-Zahl erfolgte nach DIN 53240:
OH-Zahl: 416 mgKOH/g

Phosphorylierung des Polycarbonats mit Diphenylphosphinsäurechlorid:
In einem 2L Vierhalskolben, ausgestattet mit Teflon-Rührer, Rückflusskühler, Thermometer und Tropfrichter, wurden 403,5 g des hochverzweigten Polycarbonats aus Beispiel 1 in 400 mL Toluol unter Argon-Inertisierung gelöst. 379.5 g Triethylamin wurde auf einmal zugegeben. Die Mischung wurde auf 90 °C erwärmt und 710,5 g Diphenylphosphinsäurechlorid wurden innerhalb von 120 Minuten zugetropft. Anschließend wurde die Mischung bei 80 °C für 12 Stunden nachgerührt. Umsatzkontrolle mittels ³¹P-NMR indizierte quantitativen Umsatz des Säurechlorides.

Nach Abkühlen auf Raumtemperatur wurde das Reaktionsgemisch zweimal mit einem Liter 10 Gew.-%-iger Natriumbikarbonat Lösung und einmal mit 500 mL Wasser extrahiert. Die organische Phase wurde über Natriumsulfat getrocknet. Nach Entfernung der flüchtigen Bestandteile im Vakuum wurde das Produkt (Polymer 1) als dunkel-gelbes Öl isoliert.

Analytik:
OH-Zahl: 2 mg KOH/g

Gemäß Tabelle 1 und Tabelle 2 wurden Polyurethanschaumstoffe hergestellt, indem zunächst alle Komponenten bis auf Metallkatalysatoren und Isocyanat verrührt wurden. Anschließend wurden gegebenenfalls Metallkatalysatoren zugesetzt und ebenfalls eingerührt. Das Isocyanat wurde getrennt abgewogen und dann zu der Polyolkomponente gegeben. Das Gemisch wurde verrührt bis die Reaktion einsetzte und dann in eine mit einer Plastikfolie ausgekleidete Metallbox gegossen. Die Gesamtansatzgröße betrug jeweils 1800 g. Der Schaum reagierte über Nacht aus und wurde in Probekörper zersägt.

**Tabelle 1:**

| | | **Referenz 1** | **Referenz 2** | **Referenz 3** | **Referenz 4** | **Referenz 5** |
|---|---|---|---|---|---|---|
| **Polyole 1** | | 66,70 | 66,70 | 66,70 | 66,70 | 66,7 |
| **Polyol 2** | | 33,30 | 33,30 | 33,30 | 33,30 | 33,3 |
| **Tegostab B8681** | | 0,50 | 0,50 | 0,50 | 0,50 | 0,5 |
| **Katalysatorsystem 1** | | 0,42 | 0,38 | 0,45 | 0,35 | 0,45 |
| **Diethanolamin (80%)** | | 1,49 | 1,49 | 1,49 | 1,49 | 1,49 |
| **Ortegol 204** | | 1,50 | 1,50 | 1,50 | 1,50 | 1,50 |
| **Katalysatorsystem 2** | | | | | | |
| **Glycerin** | | | | | | |
| **Wasser** | | 1,90 | 2,10 | 2,10 | 2,10 | 2,10 |
| | | | | | | |
| **Reofos® TPP** | | | 8,00 | | | |
| **Fyroflex® BDP** | | | | 8,00 | | |
| **Fyrol® 6** | | | | | 8,00 | |
| **TCPP** | | | | | | 8,00 |
| **Isocyanat 1** | | 100 | 100 | 100 | 100 | 100 |
| | | | | | | |
| **P-Gehalt Schaum** | [%] | 0 | 0,5 | 0,5 | 0,6 | 0,5 |
| **Cl-Gehalt Schaum** | [%] | 0 | 0 | 0 | 0 | 1,7 |
| | | | | | | |
| **Raumgewicht** | [kg/m³] | 37,2 | 36 | 32,8 | 35,5 | 35,4 |
| **Stauchhärte** bei **40 %** | [kPa] | 3,5 | 4,2 | 3,4 | 4,8 | 3,7 |
| **Rückprallelastizität** | [%] | 53 | 54 | 54 | 49 | 55 |
| **Luftdurchlässigkeit** | [dm³/s] | 0,567 | 0,598 | 1,153 | 0,695 | 0,667 |
| ***California TB 117A*** | | | | | | |
| **Mittlere verkohlte Länge** | [cm] | 262 | 134 | 207 | 155 | 112 |
| **Maximale verkohlte Länge** | [cm] | 306 | 147 | 256 | 176 | 128 |
| **Mittlere Nachbrennzeit** | [s] | 29 | 0 | 25 | 1 | 0 |
| **Maximale Nachbrennzeit** | [s] | 42 | 0 | 68 | 2 | 0 |
| **Mittlere Nachglühzeit** | [s] | 0 | 0 | 0 | 0 | 0 |
| **Ergebnis** | | nicht bestanden | bestanden | nicht bestanden | nicht bestanden | bestanden |

**Tabelle 2:**

| | | **Beispiel 1** | **Beispiel 2** | **Beispiel 3** | **Beispiel 4** | **Beispiel 5** |
|---|---|---|---|---|---|---|
| **Polyol 1** | | 66,70 | 66,70 | 66,70 | 66,70 | 66,70 |
| **Polyol 2** | | 33,30 | 33,30 | 33,30 | 33,30 | 33,30 |
| **Tegostab B8681** | | 0,50 | 0,50 | 0,50 | 0,50 | 0,50 |
| **Katalysatorsystem 1** | | 0,4 | 0,45 | | | |
| **Diethanolamin (80%)** | | 1,49 | 1,49 | 1,49 | 1,49 | 1,49 |
| **Ortegol 204** | | 1,50 | 1,50 | 1,50 | 1,50 | |
| **Katalysatorsystem 2** | | | | 1,00 | 1,00 | 0,65 |
| **Glycerin** | | | | | | |
| **Water** | | 2,20 | 2,00 | 2,45 | 2,70 | 2,80 |
| | | | | | | |
| **HB-Polyol 1** | | 12,00 | | | | |
| **HB-Polyol 2** | | | 12,00 | | | |
| **HB-Polyol 3** | | | | 12,00 | | |
| **HB-Polyol 4** | | | | | 12,00 | |
| HB-Polyol 5 | | | | | | 12,00 |
| **Isocyanat 1** | | 100 | 100 | 100 | 100 | 100 |
| | | | | | | |
| **P-Gehalt Schaum** | [%] | 0,5 | 0,4 | 0,7 | 0,7 | 0,6 |
| **Cl-Gehalt Schaum** | [%] | 0 | 0 | 0 | 0 | 0 |
| ***Mechanik*** | | | | | | |
| **Raumgewicht** | [kg/m³] | 32,3 | 36,7 | 37,4 | 32,3 | 37,5 |
| **Stauchhärte bei 40 %** | [kPa] | 3 | 3,5 | 5,8 | 4,2 | 3,1 |
| **Rückprallelastizität** | [%] | 53 | 52 | 50 | 51 | 52 |
| **Luftdurchlässigkeit** | [dm³/s] | 1,133 | 0,816 | 0,518 | 0,788 | 0,429 |
| ***California TB 117A*** | | | | | | |
| **Mittlere verkohlte Länge** | [cm] | 138 | 129 | 117 | 120 | 132 |
| **Maximale verkohlte Länge** | [cm] | 152 | 145 | 127 | 124 | 150 |
| **Mittlere Nachbrennzeit** | [s] | 0 | 1 | 0 | 0 | 1 |
| **Maximale Nachbrennzeit** | [s] | 0 | 3 | 0 | 0 | 0 |
| **Mittlere Nachglühzeit** | [s] | 0 | 0 | 0 | 0 | 0 |
| **Ergebnis** | | bestanden | bestanden | bestanden | bestanden | bestanden |

| | | | | | | |
|---|---|---|---|---|---|---|
| Dabei bedeutet: Polyol 1: Polyoxypropylen-polyoxyethylen-polyol; OH-Zahl: 35; Funktionalität: 2,7 Polyol 2: Graftpolyol auf Basis Styrol-Acrylnitril; Feststoffgehalt: 45 %; Polyoxypropylen-oxyethylen-Polyol; OH-Zahl: 20; Funktionalität: 2,7 Katalysatorsystem 1: Standardkatalyse aus Metallkatalysator und Aminkatalysator Katalysatorsystem 2: teilweise durch Ameisensäure geblockte Aminkatalysatoren Isocyanat 1: Mischung aus 2,4- und 2,6-Toluoldiisocyanat HB-Polyol 1: Hyperverzweigtes Polycarbonat, teilweise mit Chlordiphenylphosphat umgesetzt; OH-Zahl: 12; 6,6 Gew.-% P HB-Polyol 2: Hyperverzweigtes Polycarbonat, mit Chlordiphenylphosphat umgesetzt; OH-Zahl: 0; 4,8 Gew.-% P HB-Polyol 3: Hyperverzweigtes Polycarbonat, teilweise mit Chlordiphenylphosphinsäurechlorid umgesetzt; OH-Zahl: 2; 9,1 Gew.-% P HB-Polyol 4: Hyperverzweigtes Polycarbonat, teilweise mit Chlordiphenylphosphinsäurechlorid umgesetzt; OH-Zahl: 19; 9,0 Gew.-% P HB-Polyol 5: Hyperverzweigtes Polycarbonat, teilweise mit Chlordiphenylphosphinoxid umgesetzt; OH-Zahl: 43; 7,7 Gew.-% P Reofos^{®} TPP: Triphenylphosphat; 9,5 Gew.-% P (Chemtura) Fyrolflex^{®} BDP: Bisphenol A bis(diphenylphosphat)/Triphenylphosphat); 8,9 - 9 Gew.-% P (Supresta) Fyrol^{®} 6: Phosphonsäure[bis(2-hydroxyethyl)amino]methyldiethylester; 12 Gew.-% P (Supresta) | | | | | | |

Die Kennwerte wurden nach folgenden Methoden bestimmt:
Rohdichte in kg/m³: DIN EN ISO 845
Stauchhärte in kPa: DIN EN ISO 3386
Rückpralleslastizität in %: DIN EN ISO 8307
Luftdurchlässigkeit in dm³/s: DIN EN ISO 7231
Flammschutz: California TB 117 A

Aus den Tabellen ist ersichtlich, dass die erfindungsgemäßen halogenfreien Polyurethanweichschäume sehr guten Flammschutz aufweisen, ähnlich oder besser den Vergleichsschäumen, die mit kommerziell erhältlichen Mustern bei ähnlichem oder sogar höherem Phosphorgehalt erzielt wurden. Zusätzlich ist zu beobachten, dass die mechanischen Eigenschaften der Schäume trotz der einbaubaren Flammschutzmittel nicht verschlechtert, sondern eher verbessert werden.

Vergleichsbeispiel 4 zeigt, dass dies bei kommerziellen Mustern nicht unbedingt der Fall ist, hier verschlechtert sich die Elastizität deutlich. Bei niedrigen Dichten wirken die neuartigen Strukturen bei gleichem oder unwesentlich höherem Phosphorgehalt besser als die kommerziellen Muster aus Vergleichsbeispiel 3. Ein Polyurethanschaum mit Triphenylphosphat als Flammschutzmittel (Vergleichsbeispiel 2) zeigt zwar dieselben Qualitäten hinsichtlich des Flammschutzes und der mechanischen Eigenschaften wie die hyperverzweigten, phosphorhaltigen Polycarbonate, dabei trägt aber die niedermolekulare Verbindung signifikant zu Emissionen des Schaumstoffs bei. Vergleicht man die Ergebnisse aus Tabelle 2 mit dem Ergebnis, das mit dem am weitesten verbreiteten kommerziellen Flammschutzmittel Tris(chlorisopropyl)phosphat (TCPP) erzielt wurde, so sieht man, dass die Ergebnisse durchaus vergleichbar sind. Dabei weist der Schaum mit Trichlorisopropylphosphat den gleichen Phosphorgehalt auf, jedoch zusätzlich noch 1,7 % Chlor. Es handelt sich somit nicht um einen halogenfreien Flammschutz. Die Ergebnisse zeigen, dass phosphorylierte hyperverzweigte Polycarbonate geeignete Flammschutzmittel sind, um das halogenierte Tris(chlorisopropyl)phosphat zu ersetzen. Dabei muss überraschernderweise trotz des fehlenden Chlors der Phosphorgehalt nicht erhöht werden, um gleiche Effekte zu erzielen.

Weiter wurde gemäß Tabelle 3 ein Polyurethanhartschaum hergestellt:

**Tabelle 3**

| | Beispiel 5 | Referenz 6 |
|---|---|---|
| Polyol 3 | 65 | 65 |
| Polyol 4 | 10 | 10 |
| Stabilisator 1 | 2 | 2 |
| | | |
| HB-Polyol 5 | 25 | |
| Trichlorisopropylphosphat | | 25 |
| | | |
| Treibmittel 1 | 9 | 9 |
| Treibmittel 2 | 1,6 | 1,6 |
| Katalysator 3 | 1,2 | 1,2 |
| Katalysator 4 | 2 | 2 |
| Isocyanat 2 | 190 | 190 |
| | | |
| Dichte (g/L) | 45 | 45 |
| Abbindezeit (s) | 45 | 45 |
| Klebefreie Zeit (s) | 65 | 64 |
| | | |
| BKZ 5 Test | bestanden | bestanden |

| | | |
|---|---|---|
| Dabei wurden die folgenden Einsatzstoffe verwendet: Polyol 3: Veresterungsprodukt aus Phthalsäureanhydrid und Diethylenglykol, OHZ = 220 mg KOH/g Polyol 4: Polyethylenglykol, OHZ = 200 mg KOH/g Stabilisator 1: Tegostab® B 8467 (Evonik Goldschmidt GmbH) HB-Polyol 5: Hyperverzweigtes Polycarbonat, teilweise mit Chlordiphenylphosphatumgesetzt; OHZ = 19 mg KOH/g, Phosphorgehalt 10,3 Gew.-% Treibmittel1: n-Pentan Treibmittel 2: Ameisensäure (85 Gew.-%) Treibmittel 3: Mischung aus Wasser und Dipropylenglykol, Gewichtsverhältnis 3:2 Katalysator 1: Kaliumformiat (36 Gew.-% in Ethylenglykol) Katalysator 2: Bis(2-dimethylaminoethyl)ether (70 Gew.-% in Dipropylenglykol) Isocyanat 1: polymeres MDI | | |

Dabei ist die klebefreie Zeit definiert als die Zeitspanne zwischen Rührbeginn und dem Zeitpunkt, bei dem beim Berühren der Schaumoberfläche mit einem Stab o.ä. kaum noch ein Klebeeffekt feststellbar ist. Die klebfreie Zeit ist ein Maß für die Effektivität der Urethanreaktion.

BKZ5-Test: Flammtest nach der Schweizer Prüf- und Klassierungsnorm der Vereinigung Kantonaler Feuerversicherungen zur Bestimmung der Brennbarkeit von Baustoffen.

Zur Herstellung der PU-Hartschaumstoffe wurden die verwendeten Polyole, Stabilisatoren, Flammschutzmittel, Katalysatoren und Treibmittel verrührt und anschließend mit dem Isocyanat vermischt und zum PU-Hartschaumstoff verschäumt.

Aus der Tabelle 3 ist ersichtlich, dass mit erfindungsgemäßen phosphorhaltigen Polycarbonaten der BKZ5-Test bestanden werden kann ohne dass die Reaktivität des Schaumsystems beeinflußt wird. Im Vergleich zu üblichen kommerziellen Flammschutzmitteln wie TCPP sind die erfindungsgemäßen Flammschutzmittel jedoch halogenfrei.

## Patentansprüche

1. Polycarbonat, enthaltend mindestens eine phosphorhaltige Gruppe.

2. Polycarbonate nach Anspruch 1, wobei die phosphorhaltige Gruppe eine Verbindung der allgemeinen Formel 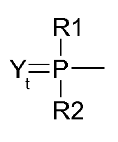 ist, und Y für O oder S steht,
t für 0 oder 1 steht,
R1 und R2 unabhängig voneinander für Wasserstoff, C₁-C₁₆-Alkyl, C₂-C₁₆-Alkenyl, C₂-C₁₆-Alkinyl, C₁-C₁₆-Alkoxy, C₂-C₁₆-Alkenoxy, C₂-C₁₆-Alkinoxy, C₃-C₁₀-Cycloalkyl, C₃-C₁₁₀-Cycloalkoxy, Aryl, Aryloxy, C₆-C₁₀-Aryl-C₁-C₁₆-Alkyl, C₆-C₁₀-Aryl-C₁-C₁₆-Alkoxy, C₁-C₁₆-(S-Alkyl), C₂-C₁₆-(S-Alkenyl), C₂-C₁₆-(S-Alkinyl), C₃-C₁₀-(S-Cycloalkyl), S-Aryl, NHC₁-C₁₆Alkyl, NHAryl, SR³, COR⁴, COOR⁵, CONR⁶R⁷ steht und die Reste R³, R⁴, R⁵, R⁶ und R⁷ unabhängig voneinander für C₁-C₁₆-Alkyl, C₂-C₁₆-Alkenyl, C₂-C₁₆-Alkinyl, C₃-C₁₀-Cycloalkyl, Aryl, Aryl-C₁-C₁₆-Alkyl, C₁-C₁₆-(S-Alkyl), C₂-C₁₆-(S-Alkenyl), C₂-C₁₆-(S-Alkinyl) oder C₃-C₁₀-(S-Cycloalkyl) stehen oder die Reste R1 und R2 zusammen mit dem Phosphoratom ein Ringsystem bilden.

3. Polycarbonate nach Anspruch 2, wobei R1 gleich R2 ist und R1 und R2 jeweils für Methoxyphenyl, Tolyl, Furyl, Cyclohexyl, Phenyl, Phenoxy, Ethoxy oder Methoxy stehen.

4. Polycarbonate nach einem der Ansprüche 1 bis 3, wobei das Polycarbonat mindestens 3 Gew.-% Phosphor enthält.

5. Polycarbonat nach einem der Ansprüche 1 bis 4, wobei keine OH-Gruppen enthalten sind.

6. Polycarbonat nach einem der Ansprüche 1 bis 4, enthaltend mindestens eine OH-Gruppe.

7. Polycarbonate nach Anspruch 6 , wobei das Polycarbonat eine OH-Zahl von 2 bis 800 mgKOH/g aufweist.

8. Polycarbonate nach einem der Ansprüche 1 bis 7, enthaltend Propylenoxid-und/oder Ethylenoxideinheiten.

9. Polycarbonate nach einem der Ansprüche 1 bis 8, **dadurch gekennzeichnet, dass** das Polycarbonat ein hyperverzweigtes Polycarbonat ist.

10. Polycarbonate nach einem der Ansprüche 1 bis 9, **dadurch gekennzeichnet, dass** das Polycarbonat keine aromatischen Bestandteile im Carbonatgerüst aufweist.

11. Verwendung eines Polycarbonats nach einem der Ansprüche 1 bis 10 als Flammschutzmittel.

12. Kunststoff, enthaltend ein Polycarbonat nach einem der Ansprüche 1 bis 10.

13. Verfahren zur Herstellung eines Polyurethans, bei dem man Isocyanate (a) mit Polyolen (b), einem Polycarbonat nach einem der Ansprüche 1 bis 10 (c) und gegebenenfalls Treibmittel (d), Katalysator (e) und sonstigen Hilfs- und Zusatzstoffen (f) zu einer Reaktionsmischung vermischt und zum Polyurethan ausreagieren lässt.

14. Verfahren zur Herstellung eines Polyurethans nach Anspruch 13, wobei das Polyurethan ein Polyurethanschaumstoff ist.

15. Polyurethan, erhältlich nach Anspruch 13 oder 14.
